# EUROPÄISCHE PATENTSCHRIFT

(11) **EP 2 269 856 B1**
(45) Veröffentlichungstag und Bekanntmachung des Hinweises auf die Patenterteilung: **08.08.2012**
(21) Anmeldenummer: 09008298.3
(22) Anmeldetag: 25.06.2009
(51) Int. Cl.: B60J 7/22

(54) **Strukturverstärkendes Formteil für eine Luftleiteinrichtung eines Kraftfahrzeugs**
Structure-reinforcing moulded element for an air deflector of a motor vehicle
Pièce de formage pour renforcer la structure d'un déflecteur d'air d'un véhicule automobile

(43) Veröffentlichungstag der Anmeldung: 05.01.2011
(73) Patentinhaber: TB&C Outsert Center GmbH, 35745 Herborn (DE)
(72) Erfinder: Wetzels, Ralf, 42499 Hückeswagen (DE)
(74) Vertreter: Weilnau, Carsten

(56) Entgegenhaltungen:
- EP-A- 1 977 923
- DE-A1- 10 210 142
- DE-A1-102007 051 878

## Beschreibung

Die vorliegende Erfindung betrifft ein strukturverstärkendes Formteil für eine Luftleiteinrichtung eines Kraftfahrzeugs gemäß dem Oberbegriff des Anspruchs 1, sowie ein Verfahren zur Herstellung eines strukturverstärkenden Formteils gemäß dem Anspruch 12.

### Stand der Technik

Luftleiteinrichtungen werden im Kraftfahrzeugbereich typischerweise als Windabweiser oder als Windschott verwendet. In Verbindung mit einem Schiebedachsystem erfüllen sie insbesondere bei geöffnetem Schiebedach die Funktion, etwaige, durch periodische Luftdruckänderungen hervorgerufene Störgeräusche, welche im Fahrzeuginneren als Wummern wahrnehmbar sind, zu unterdrücken bzw. deren Entstehung zu unterbinden. Ein Windabweiser ist hierzu üblicherweise im Bereich des in Fahrtrichtung des Fahrzeugs vorn liegenden Randes einer Schiebedachöffnung anzuordnen.

Ein beweglich gelagerter Aussteller des Windabweisers geht bei geöffnetem Schiebedach in eine gegenüber einer Grundstellung angehobene Gebrauchsstellung oder in seine Ausstellposition über. Durch das Anheben des Ausstellers wird ein einerseits am Aussteller und andererseits an einem typischerweise fahrzeugfesten Basisteil befestigtes luftdurchlässiges Flächenstück gespannt. Das Aufspannen des Flächenstücks führt bei einem bewegten Fahrzeug zu einer gezielten, lokalen Luftverwirbelung, die der Entstehung von akustisch wahrnehmbaren Luftdruckschwankungen effektiv entgegenwirken kann.

Einen an sich bekannten Windabweiser offenbart beispielsweise die DE 102 10 142 A1. Dieser Windabweiser weist einen mit einem Basiselement schwenkbar verbundenen Aussteller auf, wobei am Basiselement und am Aussteller ein luftdurchlässiges und flexibles Abweiserelement angeordnet ist. Ferner ist eine Ausstellerfeder vorgesehen, die den Aussteller bei geöffnetem Schiebedach in eine ausgestellte Stellung beaufschlagt, in welcher das Abweiserelement zwischen dem Basisteil und dem Aussteller gespannt ist. Die Befestigung des Abweiserelementes am Basiselement und/oder am Aussteller erfolgt dabei vorzugsweise durch einen Spritzgussprozess.

Des Weiteren ist eine als Ausstellerfeder fungierende Schenkelfeder aus Draht vorgesehen, die als Gelenk zwischen dem Aussteller und dem Basisteil dient. Die Schenkel der Schenkelfedern können in das Basiselement und den Aussteller eingesteckt werden und dort mechanisch verrasten. Ferner ist es möglich, die Schenkelfeder in die Gussform für das Basiselement und den Aussteller einzulegen und dort unmittelbar einzuspritzen.

Fertigungstechnisch ist es erforderlich, das Abweiserelement vor dem Anspritzen oder Umspritzen des Ausstellers bzw. des Basisteils mit Kunststoff an diesem zu befestigen oder zu fixieren. Hierfür ist für den Aussteller und/oder das Basisteil ein strukturverstärkendes Formteil typischerweise in Form eines Metallbügels vorgesehen, an welchem das Abweiserelement vor einem Umspritzen des Metallbügels befestigt werden kann.

Es erweist sich hierbei von Nachteil, dass der im Spritzgussprozess zu umspritzende Metallbügel herstellungsbedingt verhältnismäßig große Bauteiltoleranzen aufweist. Dies kann dazu führen, dass mit Einlegen des zu umspritzenden Metallbügels in eine Spritzgussform der Metallbügel zumindest bereichsweise einer biegeelastischen Verformung unterliegt. Unmittelbar nach dem Spritzgussvorgang, im Zuge dessen der Metallbügel beispielsweise mit einem thermoplastischen Elastomer umspritzt wird, können seitens des umspritzten Metallbügels biegeelastische Rückstellkräfte zutage treten, die zu einer Verformung des mit Kunststoff umspritzten Ausstellers oder Basisteils führen können.

Daneben besteht die Gefahr, dass sich aufgrund biegeelastischer Rückstellkräfte des Metallbügeleinlegers die Wandstärke der Kunststoffumspritzung bereichsweise und lokal ändert. Auch kann es vorkommen, dass der zu umspritzende Metalleinleger beim Spritzgussprozess innenseitig an der Spritzgussform anliegt, sodass Bereiche des Metalleinlegers nach erfolgtem Spritzgussprozess sichtbar an der umspritzten Kunststoffschicht zutage treten können.

### Aufgabe

Es ist daher Aufgabe der vorliegenden Erfindung, ein strukturverstärkendes Formteil für eine Luftleiteinrichtung eines Kraftfahrzeuges zur Verfügung zu stellen, das eine im Vergleich zum Stand der Technik verbesserter Maßhaltigkeit und geringere Fertigungstoleranzen aufweist. Das Formteil soll dabei insbesondere in einem industriellen Massenherstellungsprozesses kostengünstig herstellbar sein. Daneben ist es Ziel der Erfindung, eine Luftleiteinrichtung, etwa einen Windabweiser oder ein Windschott mit einem mit Kunststoff umspritzten strukturverstärkenden Einleger zur Verfügung zu stellen, wobei die umspritzte Kunststoffschicht vorgegebene Wandstärken möglichst maßgenau einhalten soll. Es ist ein weiteres Ziel der Erfindung, die Herstellung eines Windabweisers oder Windschotts unter fertigungsrationellen und kosteneinsparenden Gesichtspunkten zu optimieren.

### Erfindung und vorteilhafte Wirkungen

Die der Erfindung zugrundeliegende Aufgabe wird mit Hilfe eines strukturverstärkenden Formteils gemäß dem unabhängigen Patentanspruch 1, und mit Hilfe eines Verfahrens zur Herstellung eines Formteils nach Patentanspruch 12 gelöst. Einzelne vorteilhafte Ausgestaltungen der Erfindung sind in den jeweiligen abhängigen Patentansprüchen angegeben.

Das erfindungsgemäße strukturverstärkende Formteil ist für eine Luftleiteinrichtung eines Kraftfahrzeugs, insbesondere für einen Windabweiser oder für ein Windschott ausgebildet. Das Formteil weist einen bereichsweise gekrümmten Verlauf auf. Es kann beispielsweise eine im Wesentlichen U-förmige Außenkontur mit zwei seitlichen Schenkeln und einem, die Schenkel verbindenden Mittelabschnitt aufweisen. Zur Einhaltung vorgegebener geometrischer Abmessungen und Außenkonturen und/oder zur Einhaltung vorgegebener geometrischer Toleranzen weist das Formteil eine Vielzahl voneinander beabstandeter Deformationsabschnitte auf, welche jeweils durch lokale plastische Deformationen des Formteils erzeugbar sind.

Das strukturverstärkende Formteil ist demgemäß Gegenstand eines oder mehrerer plastischer Deformationsprozesse, im Zuge derer mehrere plastisch deformierte Deformationsabschnitte in die Außenkontur des Formteils eingebracht werden. Hierdurch können die im Formteil inhärent vorhandenen biegeelastischen Rückstellkräfte egalisiert werden, sodass durch das plastische und bereichsweise Verformen des Formteils eine geforderte Maßhaltigkeit zur Verfügung gestellt werden kann.

Die einzelnen voneinander beabstandeten, über den Außenumfang und/oder über die Längserstreckung des Formteils verteilt angeordneten Deformationsabschnitte lassen die Grundgeometrie des Formteils dabei im Wesentlichen unverändert. Die geometrischen Abmessungen eines Deformationsabschnittes sind daneben verhältnismäßig klein gegenüber den Außenabmessungen des Formteils und/oder seines Durchmessers.

Nach einer bevorzugten Ausgestaltung der Erfindung ist insbesondere vorgesehen, dass die lokalen plastisch deformierten Deformationsabschnitte zur Reduzierung von durch bereichsweises Biegen oder Krümmen des Formteils bedingten Rückstellkräften, mittels Prägen, insbesondere mittels eines Prägeprozesses in das Formteil einbringbar sind. Das Formteil ist daher Gegenstand eines Prägeprozesses, im Zuge dessen die zur Egalisierung und zur Kompensation etwaiger, ansonsten vorhandener elastischer Rückstellkräfte, vorzusehenden plastischen Deformationsabschnitte in das Formteil einzubringen sind. Das Prägewerkzeug weist eine der Formgebung des Formteils entsprechende Pressform auf. Je nach Ausgestaltung und Anzahl einzelner Pressformen oder Prägestempel, Matrizen und Patrizen, kann das strukturverstärkende Formteil im Zuge des Prägeprozesses in sämtlichen drei Raumrichtungen auf die geforderte Maßhaltigkeit und zur Einhaltung vorgegebener geringstmöglicher geometrischer Toleranzen bereichsweise plastisch verformt werden.

Durch Einbringen der beschriebenen plastischen Deformationsabschnitte können die ansonsten im Formteil, etwa durch Einlegen in eine Spritzgussform auftretenden biegeelastischen Verformungen sowie die damit einhergehenden elastischen Rückstellkräfte egalisiert, kompensiert und aus dem Formteil abgeführt werden.

Nach einer weiteren vorteilhaften Ausgestaltung der Erfindung ist vorgesehen, dass das Formteil in einem zumindest bereichsweise im Wesentlichen geradlinig verlaufenden Mittelabschnitt als Sicken ausgebildete plastisch deformierte Deformationsabschnitte aufweist, welche im Wesentlichen senkrecht oder schräg zur Längserstreckung des Mittelabschnitts verlaufen. Durch Einbringen solcher schräg oder senkrecht zum Mittelabschnitt verlaufender Prägestellen können etwaige senkrecht oder schräg zur Längserstreckung des Mittelabschnitts verlaufende Biegemomente im Wesentlichen egalisiert oder kompensiert werden.

Nach einer weiteren Ausgestaltung der Erfindung ist vorgesehen, dass der Mittelabschnitt des Formteils über jeweils einen Krümmungsabschnitt in zwei Seitenschenkel übergeht, welche sich schräg oder senkrecht zur Längserstreckung des Mittelabschnitts erstrecken. Vorzugsweise ist der Übergang von Mittelabschnitt zu Seitenschenkel einstückig ausgebildet. Dabei kann insbesondere vorgesehen sein, dass Mittelabschnitt und Seitenschenkel, ausgehend von einem ursprünglich, im Wesentlichen geradlinig verlaufenden Metallbügelzuschnitt mittels eines Biegeprozesses umgeformt wurden.

Von Vorteil erweist es sich dabei, wenn gerade in jenem Krümmungsabschnitt, welcher Seitenschenkel und Mittelabschnitt des Formteils miteinander verbindet, gleichermaßen plastisch deformierte Deformationsabschnitte eingearbeitet sind. Die Deformationsabschnitte im Bereich des Krümmungsabschnitts des Formteils können dem Verlauf des Krümmungsabschnittes angepasst und mit diesem verlaufend ausgebildet sein.

Zum Vorteil weist das Formteil beidseits seines im Wesentlichen geradlinig verlaufenden Mittelabschnitts jeweils einen Krümmungsabschnitt auf, der in jeweils einen Seitenschenkel einstückig übergeht. Die beiden Seitenschenkel sind dabei bevorzugt parallel zueinander ausgerichtet. Insoweit weist das Formteil einen im Wesentlichen U-förmigen Verlauf mit zwei Seitenschenkeln und einen die beiden Seitenschenkel einstückig miteinander verbindenden Mittelabschnitt auf.

Nach einer weiteren bevorzugten Ausgestaltung der Erfindung ist vorgesehen, dass das Formteil zumindest bereichsweise als geschlossenes Hohlprofil oder als Rohr ausgebildet ist. Das Formteil kann beispielsweise aus einem hohlprofilartigen oder rohrartigen Zuschnitt gefertigt sein, welcher zunächst im Zuge eines Biegeprozesses in eine im Wesentlichen U-artige Gestalt und anschließend im Zuge des erfindungsgemäßen Prägeprozesses auf die geforderte Maßhaltigkeit gebracht wird.

Nach einem weiteren vorteilhaften Aspekt der Erfindung ist vorgesehen, dass das Formteil zumindest abschnittsweise, vorzugsweise im Bereich des Krümmungsabschnittes, ein von einem Rundprofil abweichendes Querschnittsprofil aufweist. Hierbei kann insbesondere vorgesehen werden , im Zuge des Prägeprozesses zumindest eine dem Krümmungsabschnitt folgende bzw. in Längsrichtung des Krümmungsabschnitts verlaufende Sicke und/oder eine in Längsrichtung des Krümmungsabschnitts verlaufende Prägung einzubringen, sodass der Krümmungsabschnitt über den Verlauf seiner Krümmung hinweg ein im Wesentlichen konstantes bzw. gleichbleibendes Querschnittsprofil aufweist. Dabei kann vorgesehen werden, dass plastische deformierte Deformationsabschnitte nicht nur zum Richten und zur Einhaltung erforderlicher Toleranzen in das Formteil eingebracht werden sondern auch zur Anpassung des Formteils an vorgegebene Querschnittsgeometrien in dieses einbringbar sind.

Designvorgaben für die Luftleiteinrichtung können beispielsweise erfordern, dass das Formteil entlang seiner Längserstreckung Bereiche unterschiedlicher Dicke und unterschiedlichen Querschnitts aufweist. Eine derartige, jeweils von einem Ausgangswerkstück abweichende Formgebung kann bspw. durch einen einzigen plastischen Deformationsprozess in das Formteil eingebracht werden. Von Vorteil erweist es sich dabei, wenn das Formteil zumindest bereichsweise innen hohl ist, sodass beispielsweise bei einem runden Ausgangswerkstück durch einen radial nach innen gerichteten Prägeprozess über seinen Umfang verteilt und in Längsrichtung des Werkstücks verlaufende Prägungen verhältnismäßig leicht in das Werkstück und das daraus resultierende Formteil eingebracht werden können.

Eine derartige Prägung erweist sich zudem als vorteilhaft, als dass in einem solch geprägten Abschnitt des Formteils ein Einbringen weiterer plastisch deformierter Deformationsabschnitte, beispielsweise in Form von einzelnen lokalen Sicken, entbehrlich wird.

Daneben kann nach der Erfindung vorgesehen werden, dass die freien Enden der Seitenschenkel, welche zugleich freie Enden des strukturverstärkenden Formteils bilden, jeweils zur kraftschlüssigen und/oder einklemmenden Aufnahme eines Schenkels einer Schenkelfeder ausgebildet sind. Der zur maßhaltigen Formgebung des Formteils vorgesehene Prägeprozess kann insoweit auch zur Befestigung einer Schenkelfeder am Formteil Verwendung finden. Auf einen separaten Montageprozess einer Schenkelfeder am Formteil kann insoweit in vorteilhafter Weise verzichtet werden.

Des Weiteren ist nach der Erfindung vorgesehen, dass die Seitenschenkel einem angrenzenden Krümmungsabschnitt zugewandt jeweils eine seitliche Einführöffnung zur Aufnahme einer, eine Verstellbewegung der Luftleiteinrichtung unterstützende Hilfsfeder aufweist. Diese seitliche Einführöffnung kann beispielsweise im Zuge des zur Ausrichtung des Formteils vorgesehenen Prägeprozesses am Seitenschenkel ausgestanzt werden. Ein gesondertes und separates Einbringen einer Einführöffnung für eine Hilfsfeder kann somit gleichermaßen in den das Formteil ausrichtenden Prägeprozess integriert werden.

Es kann vorgesehen werden, dass die im Zuge des richtenden Prägeprozesses in den Mittelabschnitt einbringbaren und in Längsrichtung des Mittelabschnitts benachbart zu liegen kommenden Deformationsabschnitte in Umfangsrichtung des Formteils gesehen zueinander versetzt angeordnet sind. Es kann weiter vorgesehen werden, dass die etwa sickenartig ausgebildeten plastisch deformierten Deformationsabschnitte in Längsrichtung des Mittelabschnitts gesehen abwechselnd und alternierend an unterschiedlichen Seiten in den Mittelabschnitt eingeprägt sein können. Auch können einzelne Deformationsabschnitte bezogen auf den Querschnitt des Mittelabschnitts abwechselnd von oben und von unten sowie von links oder von rechts in diesen eingebracht sein. Des Weiteren ist denkbar, dass in Längsrichtung benachbart zu liegen kommende Deformationsabschnitte jeweils in Umfangsrichtung des Formteils gesehen, jeweils um einen vorgegebenen Winkel, etwa um 30°, 45 ° 60 ° oder gar bis zu 180° versetzt zueinander angeordnet sind.

Es kann weiter vorgesehen werden, dass zumindest zwei im Wesentlichen senkrecht zueinander ausgerichtete, in der Querschnittsebene des Mittelabschnitts liegende Deformationsabschnitte nahezu oder unmittelbar aneinander in Umfangsrichtung angrenzen. So kann beispielsweise vorgesehen sein, eine in der Querschnittsebene des Mittelabschnitts verlaufende Sicke von oben sowie eine entsprechende Sicke seitlich hierzu vorzusehen. In Längsrichtung benachbart hierzu kann in einer anderen Querschnittsebene vorgesehen sein, entsprechende Sicken von unten und von der Seite links in den Mittelabschnitt einzubringen. Die in einer gemeinsamen Querschnittsebene in den Mittelabschnitt eingebrachten Sicken verlaufen bevorzugt in einem Winkel, insbesondere im Wesentlichen rechtwinklig zueinander.

Nach einem weiteren vorteilhaften Aspekt kann vorgesehen werden, dass das Formteil als Metallrohrzuschnitt aus Stahl, Aluminium, Messing oder aus dergleichen, eine entsprechende Formsteifigkeit aufweisenden Materialien gefertigt ist.

Nach einem weiteren unabhängigen Aspekt betrifft die Erfindung eine Luftleiteinrichtung für ein Kraftfahrzeug, insbesondere einen Windabweiser oder ein Windschott mit einem Basisteil und einem Aussteller, welche bei einer Ausgestaltung der Luftleiteinrichtung als Windabweiser schwenkbar miteinander verbunden sind und ein flexibles Flächenstück zwischen sich aufspannen. Das Basisteil und/oder der Aussteller weisen ein zumindest bereichsweise mit Kunststoff umspritztes erfindungsgemäßes Formteil auf.

Bei einer Ausgestaltung als Windschott kann im Unterschied zu einem Windabweiser beispielsweise lediglich das Basisteil oder der Aussteller vorgesehen sein, welche dann jeweils mit einem in Umfangsrichtung vorzugsweise geschlossen ausgebildeten im Wesentlichen rechteckigen oder trapezförmigen Formteil versehen sind, an welchem das flexible Flächenstück vor einem Spritzgussprozess vorfixiert ist und im Zuge des Spritzgussprozesses mit dem umspritzten Basisteil verbunden wird.

Nach einem weiteren vorteilhaften Aspekt kann vorgesehen werden dass das Flächenstück form- und/oder kraftschlüssig mit dem Formteil verbunden ist. Hierzu sind beispielsweise einzelne Halteclipse vorgesehen, mit welchen das Flächenstück zumindest für die Dauer des Spritzgussprozesses am Basisteil und/oder am Aussteller fixiert werden kann.

Nach einem weiteren vorteilhaften Aspekt der Erfindung ist vorgesehen, dass die in einer seitlichen Einführöffnung des Formteils einsetzbare und von der

Schwenkachse von Basisteil und Aussteller beabstandet einsetzbare Hilfsfeder mittels Umspritzen des Formteils mit Kunststoff am Aussteller und/oder am Basisteil befestigt ist. Eine im Zuge des richtenden Prägeprozesses in das Formteil einbringbare Einführöffnung kann nach erfolgtem Prägeprozess zur Aufnahme und Vorfixierung der Hilfsfeder dienen, welche dann im nachfolgenden Spritzgussprozess von Kunststoff umschlossen und auf diese Art und Weise in den Aussteller und/oder in das Basisteil eingebettet und unlösbar an diesen Komponenten der Luftleiteinrichtung befestigt werden kann.

Nach einem weiteren unabhängigen Aspekt betrifft die Erfindung ferner ein Verfahren zur Herstellung eines Formteils, wobei ein rohrartiger, vorzugsweise als geschlossenes Hohlprofil ausgebildeter Zuschnitt aus plastisch deformierbarem Material, vorzugsweise aus einem plastisch deformierbaren Metall, wie etwa Stahl, Aluminium oder Messing, in eine vorgegebene Form zunächst gebogen und anschließend zur Einhaltung vorgegebener geometrischer Toleranzen mittels eines Prägeprozesses zum Einbringen einer Vielzahl von zueinander beabstandeten Deformationsabschnitten plastisch deformiert wird.

Von Vorteil werden die plastisch deformierten Deformationsabschnitte mittels einzelner, sowohl über den Umfang als auch entlang des Zuschnitts verteilt angeordneter Prägestifte in den Zuschnitt eingebracht. Das Prägewerkzeug, die Prägeform bzw. die Prägestempel weisen demnach abschnittsweise entsprechend ausgebildete Prägestifte auf, die bei einer Zustellung des Prägewerkzeugs zumindest gerade soweit in das Formteil eingedrückt werden, dass dessen elastische Streckgrenze überschritten wird, sodass ein gewünschter plastisch deformierter Deformationsabschnitt bestimmungsgemäß entsteht.

Das Vorsehen einzelner entlang des Zuschnitts verteilt zu liegen kommender Prägestellen erweist sich gegenüber einem dem Zuschnitt kontinuierlich über seine Längserstreckung verformenden Prägeprozess insoweit von Vorteil, als dass der Zuschnitt nur bereichsweise und lokal mit einzelnen plastisch deformierten, etwa in Form von Sicken ausgebildeten Deformationsabschnitten zu versehen ist, für deren Erzeugung vergleichsweise geringere Zustellkräfte aufzubringen sind. Auch kann das hierfür erforderliche Prägewerkzeug entsprechend kostengünstig ausgelegt werden.

Daneben kann vorgesehen werden, das Formteil oder das entsprechende Ausgangswerkstück entsprechend den an die Luftleiteinrichtung gestellten Designanforderungen zumindest bereichsweise bezüglich seiner Außenabmessungen und seiner Querschnittsgeometrie mittels des Prägeprozesses zu ändern. Sollen etwa der Aussteller oder das Basisteil eines Windabweisers bereichsweise nur einen Durchmesser von z.B. 10 mm aufweisen, beträgt der Außendurchmesser eines Ausgangswerkstücks für das Formteil bereits etwa 8 mm und soll das Formteil zur Schaffung des Ausstellers oder Basisteils mit einer mindestens 1,5 bis 2,5 mm dicken Kunststoffschicht überzogen werden, so ist das Formteils in diesem Teilbereich hinsichtlich seines Außendurchmessers mit Hilfe des das Bauteil richtenden Prägeprozesses zu verkleinern.

Findet eine solche, den Durchmesser des Formteils verkleinernde Prägung statt, kann in vorteilhafter Weise auf das Einbringen weiterer plastisch deformierter Sicken in diesem Bereich verzichtet werden.

### Ausführungsbeispiele

Weitere Ziele, Merkmale sowie vorteilhafte Ausgestaltungen der vorliegenden Erfindung sind anhand der nachfolgenden Beschreibung von Ausführungsbeispielen unter Bezugnahme auf die Figuren dargestellt. Dabei bilden sämtliche beschriebenen als auch bildlich in den Figuren dargestellten Merkmale sowohl in Alleinstellung als auch in jeglicher sinnvollen Kombination untereinander den Gegenstand der vorliegenden Erfindung. Es zeigen:
- Fig. 1: in perspektivischer Darstellung einen Windabweiser gemäß der vorliegenden Erfindung,
- Fig. 2: eine vergrößerte Darstellung eines Ausschnitts des Ausstellers im Übergangsbereich zwischen Mittelabschnitt und Seitenschenkel,
- Fig. 3: eine perspektivische Darstellung einer weiteren Ausgestaltung eines Windabweisers mit einer Hilfsfeder,
- Fig. 4: eine vergrößerte Darstellung der Hilfsfeder gemäß Fig. 3,
- Fig. 5: in perspektivischer Darstellung ein in den Aussteller des Windabweisers gemäß der Fig. 1 und 3 eingebettetes strukturverstärkendes Formteil,
- Fig. 5a: einen vergrößerten Ausschnitt des Formteils im Bereich eines Krümmungsabschnitts,
- Fig. 5b: einen Querschnitt durch einen Seitenschenkel des Formteils entlang eines Schnittes A-A gemäß Figur 5a,
- Fig. 5c: eine vergrößerte Darstellung eines Mittelabschnitts des Formteils gemäß Fig. 5,
- Fig. 6a: eine schematische Querschnittsdarstellung durch den Mittelabschnitt des Formteils entlang der Schnittlinie A-A gemäß Fig. 5c,
- Fig. 6b: eine schematische, vergrößerte Darstellung des Querschnitts des Mittelabschnitts des Formteils entlang der Schnittlinie B-B gemäß Fig. 5c,
- Fig. 7a - 7d: in Längsrichtung verlaufend voneinander beabstandete Querschnitte eines Mittelabschnitts eines Formteils gemäß einer weiteren Ausführungsform der Erfindung und
- Fig. 8a - 8b: eine weitere Ausgestaltung eines Mittelabschnitts in zwei in Längsrichtung voneinander beabstandeten Querschnitten.

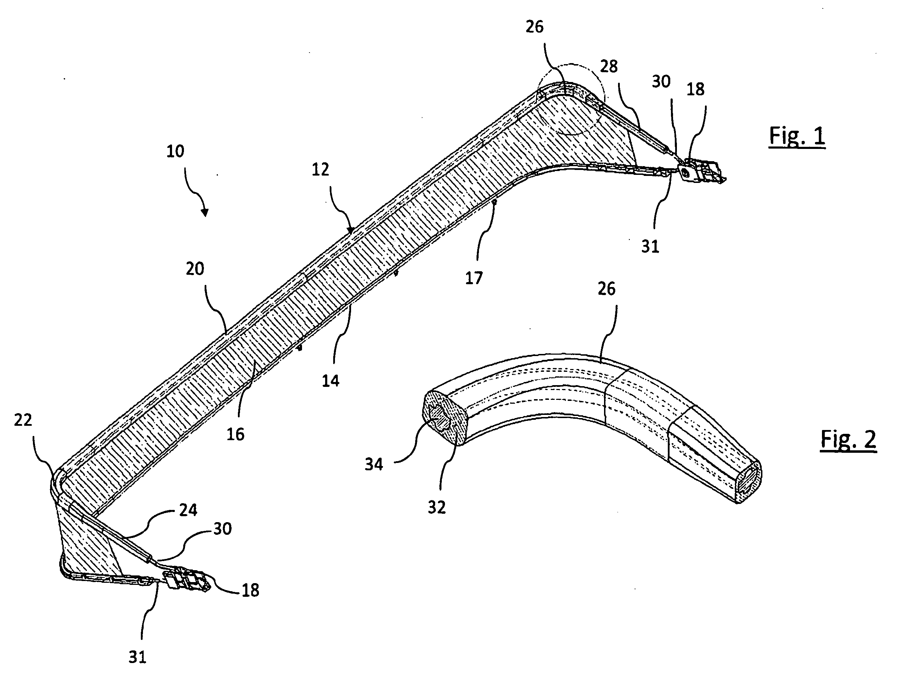

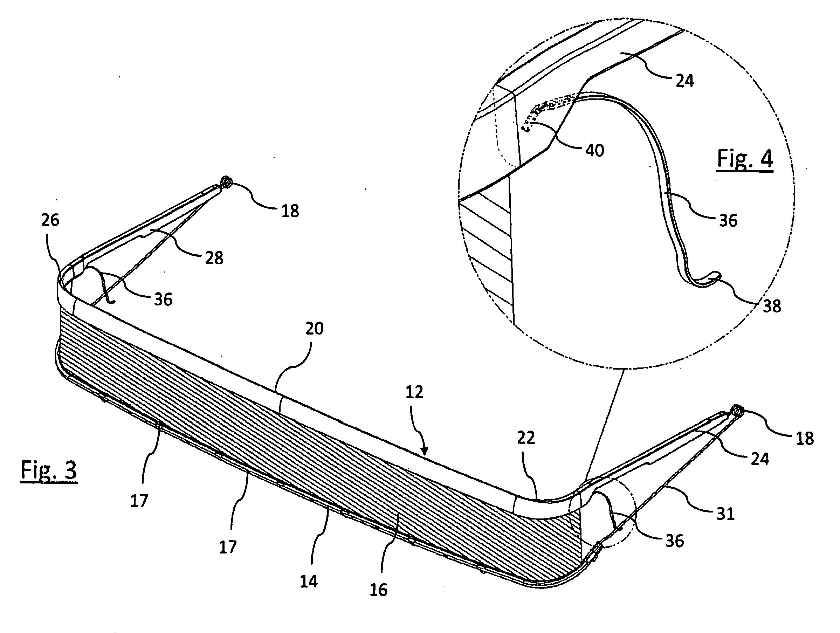

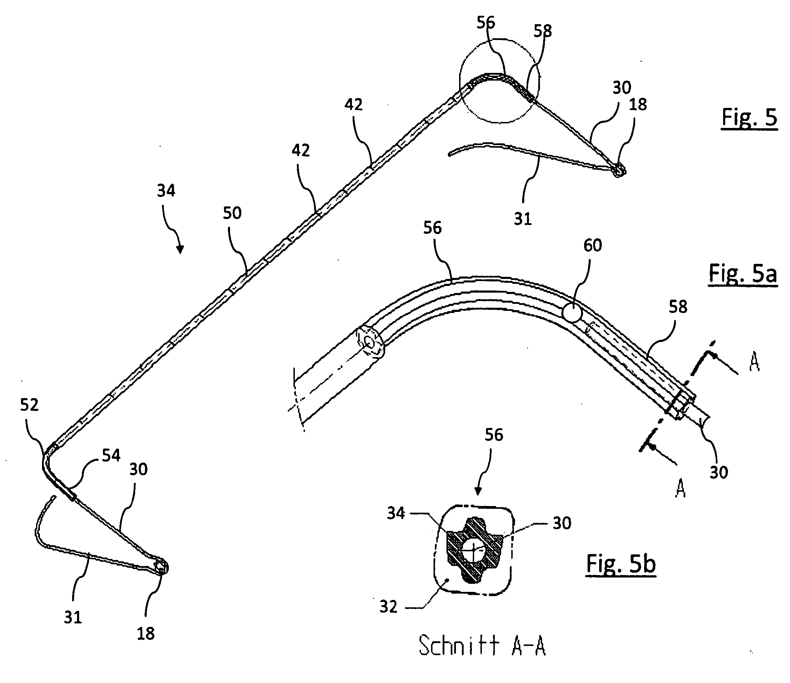

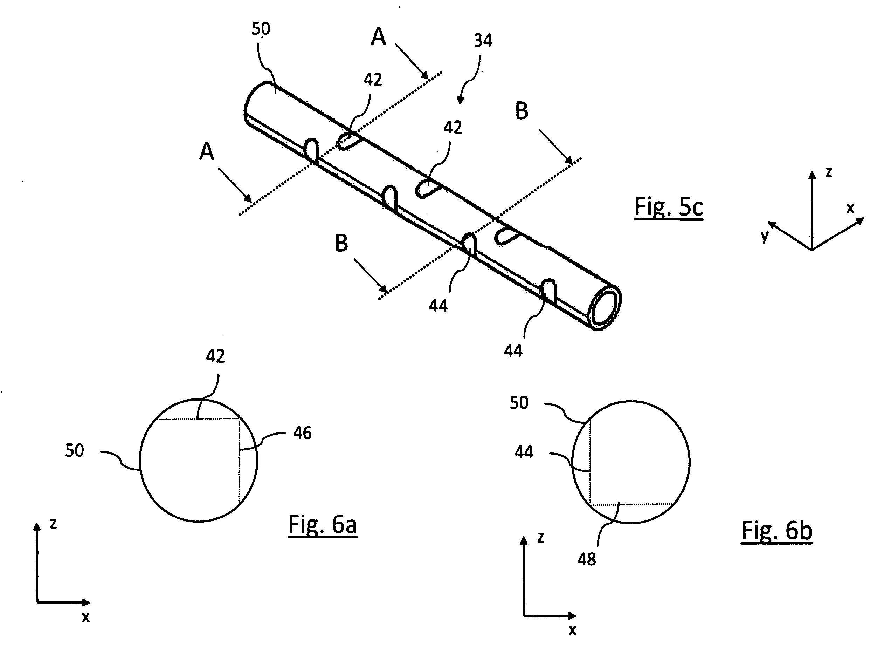

In den Fig. 1 und 3 ist ein Windabweiser 10 gezeigt, welcher ein Flächenstück 16 aufweist, das einerseits in den aufstellbaren Aussteller 12 und andererseits in das Basisteil 14 eingebettet ist. Basisteil 14 und/oder Aussteller 12 sind als ein mit einem Metalleinleger 34 strukturverstärktes Spritzgussteil ausgebildet. Das luftdurchlässige und flexibel ausgebildete Flächenstück 16, welches als textiles Gewirke, Gewebe, beispielsweise auch als Netz oder Vlies ausgebildet sein kann, wird im Herstellungsprozess zunächst an einem in Fig. 5 in Form eines Ausstellers separat dargestellten und als Einleger fungierenden Formteil 34 befestigt. Anschließend wird das Flächenstück 16 im Zuge eines Spritzgussprozesses, bei welchem nahezu das gesamte Formteil 34 von einer vorzugsweise thermoplastischen Kunststoffmasse 32 umschlossen wird, am auf diese Art und Weise gebildeten Aussteller 12 und/oder Basisteil 14 unlösbar befestigt.

Das Basisteil 14 und der Aussteller 12 sind, wie in den Fig. 1 und 3 dargestellt, über ein Gelenk 18 schwenkbar miteinander verbunden. Die Schwenkverbindung kann, wie dies insbesondere aus Fig. 3 ersichtlich ist, unmittelbar über eine Schenkelfeder 18 erfolgen, wobei zumindest ein Federschenkel 30 in den kunststoffumspritzten Aussteller 12 eingebettet ist. Wie in Fig. 3 verdeutlicht, kann der andere Federschenkel 31 unmittelbar als Basisteil 14 dienen, an welchem das Flächenstück 16 mittels einzelner Befestigungselemente 17 befestigt ist.

Aussteller 12 als auch Basisteil 14 weisen eine im Wesentlichen zueinander kongruente U-artige Außengeometrie auf. Der Aussteller 12 weist beispielsweise einen im Wesentlichen geradlinig verlaufenden Mittelabschnitt 20 sowie zwei daran angrenzende Seitenschenkel 24, 28 auf, die über jeweils einen Krümmungsabschnitt 22, 26 in das Mittelstück 20 übergehen.

Der in Fig. 1 dargestellte Aussteller 12 ist nahezu vollständig in eine Kunststoffummantelung 32 eingebettet, wie dies aus der vergrößerten, teils geschnittenen Darstellung des Krümmungsabschnitts 26 gemäß der Figuren 2 und 5b hervorgeht. Auch weist der Aussteller 12 ein strukturverstärkendes Formteil 34 auf, welches als Metalleinleger fungiert und welches im Zuge des Spritzgussprozesses von der Kunststoffummantelung 32 in Umfangsrichtung vollständig eingeschlossen wird. In den in den Figuren 2 und 5b gezeigten Bereichen weicht das Formteil 34 von einem ansonsten runden Querschnitt ab. Zur Einhaltung vorgegebener Designanforderungen und zur Verkleinerung seines Außendurchmessers sind einzelne, in Längsrichtung des Formteils verlaufende radial nach innen gerichtete Verformungen in das Formteil eingeprägt, die letztendlich dazu führen, dass das Formteil 34 in etwa im Bereich der Krümmungsabschnitte 52, 56 eine kleeblattartig anmutende Querschnittsgeometrie aufweist.

Das in Fig. 5 separat dargestellte Formteil 34 weist der Geometrie des Ausstellers 12 entsprechend einen Mittelabschnitt 50 sowie zwei Seitenschenkel 54, 58 auf, die jeweils über einen dazwischenliegenden Krümmungsabschnitt 52, 56 in den Mittelabschnitt 50 übergehen. Das in Fig. 5 gezeigte Formteil 34 weist eine Vielzahl einzelner und voneinander beabstandet angeordneter plastisch deformierter Deformationsabschnitte 42 auf, die im Bereich des Mittelabschnitts 50 nach Art einzelner sickenartiger Vertiefungen 42 ausgebildet sind.

Jene Deformationsabschnitte 42, 44, wie sie in der vergrößerten Darstellung gemäß Fig. 5c zu erkennen sind, können auch nach Art einer quer zur Längserstreckung des Mittelabschnitts verlaufenden Kerbe 42, 44 ausgebildet sein. Die einzelnen Deformationsabschnitte 42, 44 sind in den Darstellungen gemäß Fig. 5 und 5c im Wesentlichen regelmäßig und äquidistant zueinander über die Längserstreckung des Mittelabschnitts 50 angeordnet. Der Abstand von in Längsrichtung voneinander beabstandeten Deformationsabschnitten 42, 44 liegt vorzugsweise im Zentimeterbereich.

Der Abstand von in Längsrichtung zueinander beabstandeter Deformationsabschnitte 42, 44 kann zwischen 0,5 und 5 cm, vorzugsweise zwischen 1 cm und 4 cm, höchst vorzugsweise zwischen 2 und 3 cm liegen.

Durch Einbringen lokaler Deformationsabschnitte 42, 44 können biegeelastische Rückstellkräfte des vorzugsweise aus einem Metallrohrzuschnitt gefertigten Formteils 34 egalisiert und kompensiert werden. Neben den im Mittelabschnitt 50 vorgesehenen Prägestellen 42, 44 weisen auch die beidseits des Mittelabschnitts angrenzenden Krümmungsabschnitte 52, 56 eine der Krümmung folgende Prägung auf, wie dies beispielsweise anhand des Querschnitts gemäß der Figuren 2 sowie 5b erkennbar ist.

Die Krümmungsabschnitte 52, 56 des Formteils 50 weisen insoweit eine profilartige, von einem Rundprofil abweichende Querschnittsgeometrie auf. Das Querschnittsprofil mit beispielsweise vier über den Umfang des Krümmungsabschnittes 52, 56 verteilt angeordneten und entlang des Krümmungsabschnittes 52; 56 verlaufenden, den Außenumfang reduzierenden sowie radial nach innen gerichteten Prägestellen kann mittels des plastisch deformierenden Prägeprozesses in der geforderter Maßhaltigkeit hergestellt werden.

Es erweist sich insbesondere als vorteilhaft, dass das Formteil 34 nicht entlang seiner gesamten Längserstreckung, sondern gerade im Bereich seines Mittelabschnitts 50 nur abschnitts- bzw. bereichsweise einem plastisch deformierenden Prägeprozess unterzogen wird. Auf diese Art und Weise kann die zur Herbeiführung einer ausreichenden plastischen Deformation erforderliche Zustellkraft eines Prägewerkzeugs reduziert werden. Auch müssen das Prägewerkzeug und die Press- bzw. Prägeformen nur für jene vergleichsweise geringeren Zustellkräfte ausgelegt werden, was sich hinsichtlich der Herstellungs- und Betriebskosten sowie für die Handhabung des Prägewerkzeugs als vorteilhaft erweist.

Der Mittelabschnitt 50 des strukturverstärkenden Formteils 34 ist in den Fig. 6a und 6b entlang zweier Querschnitte entlang der Querschnittslinien A-A bzw. B-B gemäß Fig. 5c dargestellt. Der Mittelabschnitt 50 erstreckt sich in der späteren Endmontageposition im Kraftfahrzeug im Wesentlichen in Fahrzeugquerrichtung (Y), sodass die Querschnitte gemäß der Fig. 6a und 6b in der von Fahrzeuglängsachse (X) und Fahrzeughochachse (Z) gebildeten Achse liegen. Der Querschnitt gemäß Fig. 6a zeigt zwei sickenartige Deformationsabschnitte 42, 46, wobei der Deformationsabschnitt 42 an der Oberseite und der Deformationsabschnitt 46 seitlich, von rechts in den Mittelabschnitt 50 eingebracht sind. Die beiden Deformationsabschnitte 42, 46, welche in derselben Ebene A-A liegen, grenzen dabei unmittelbar aneinander an.

Es sind aber auch Ausgestaltungen denkbar, bei welchen die plastischen Deformationsabschnitte 42, 46 eine geringere Kerbtiefe aufweisen, sodass die sickenartigen Vertiefungen in Umfangsrichtung gesehen, voneinander separat sind.

In einer weiteren Querschnittsebene B-B gemäß Fig. 6b sind zwei korrespondierende Deformationsabschnitte 44, 48 dargestellt, welche seitlich von links bzw. von unten in den Mittelabschnitt 50 eingebracht sind. Durch ein derart alternierendes paarweises Einbringen von Deformationsabschnitten 42, 44, 46, 48 kann die vom Prägewerkzeug ausgehende Verformungskraft in Umfangsrichtung des Mittelabschnitts gesehen, weitgehend gleichmäßig verteilt in das Werkstück eingebracht werden.

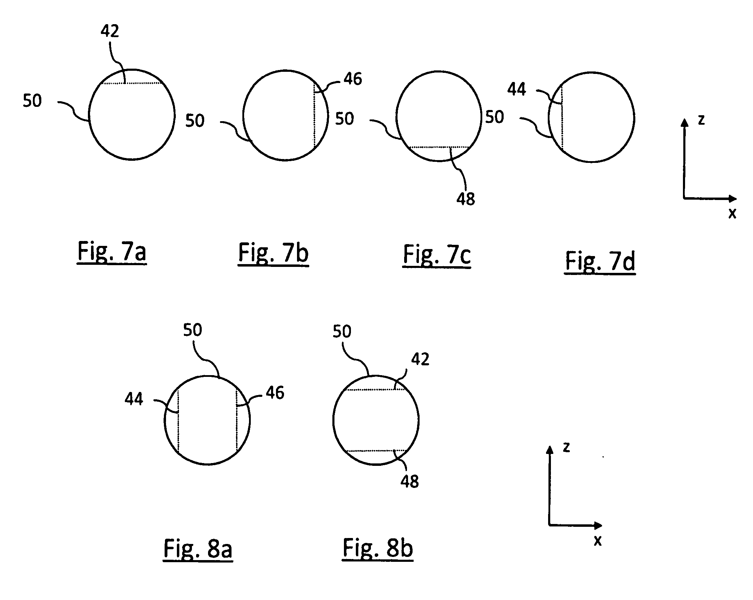

In Fig. 7 ist eine weitere Ausgestaltung möglicher sickenartig in einen Mittelabschnitt 50 eingebrachter Deformationsabschnitte 42, 44, 46, 48 gezeigt. Die Abfolge der Fig. 7a, 7b, 7c und 7d entspricht einzelnen, in Längsrichtung des Mittelabschnitts 50 sukzessive zueinander benachbarten jeweils mit Sicken versehenen Querschnittsebenen. Der oberseitigen Sicke 42 gemäß Fig. 7a folgt in Längsrichtung des Mittelabschnitts gesehen, eine seitliche Sicke 46 gemäß Fig. 7b, welche wiederum von einer unteren Sicke 48 gemäß Fig. 7c und einer weiteren seitlichen Sicke 44 gemäß Fig. 7d gefolgt ist. Bei dieser Ausgestaltung sind die einzelnen Sicken 42, 46, 48, 44 in etwa spiralartig umlaufend und um jeweils 90° in Umfangsrichtung versetzt orientiert in den Mittelabschnitt eingebracht.

In den Fig. 8a und 8b ist ferner eine weitere alternative Ausgestaltung einer Sickengeometrie entlang zweier aufeinanderfolgender mit Sicken versehener Querschnitte gezeigt. Im Querschnitt gemäß Fig. 8a sind zwei seitliche, gegenüberliegende Sicken 44, 46 in den Außenumfang des rohrartigen Mittelabschnitts 50 eingedrückt, während in einen in Längsrichtung davon beabstandeten Querschnitt des Mittelsabschnitts eine obere und eine untere Sicke 42, 48 eingedrückt sind.

In der isolierten ausschnittsweisen und vergrößerten Darstellung des strukturverstärkenden, als Einleger für den Aussteller 12 fungierenden Formteils 34 gemäß Fig. 5a ist ferner eine Aufnahmeöffnung 60 im Bereich der seitlichen Schenkel 54, 58 vorgesehen. Diese dient der einführenden Aufnahme einer Hilfsfeder 36, wie dies in den Fig. 3 und 4 dargestellt ist. Die Feder 36 weist in der in Figur 4 dargestellten Montagestellung dem Aussteller 12 zugewandt einen abgeknickten Befestigungsabschnitt 40 auf, mit welchem die Feder 36 in die am Formteil 34 vorgesehene Öffnung 60 eingesteckt werden kann. Die Öffnung 60 wird vorzugsweise im Zuge des richtenden Prägeprozesses in das Formteil 34 eingebracht bzw. aus diesem ausgestanzt. Nach erfolgtem richtendem Prägeprozess kann die Feder 36 in die Einführöffnung 60 im Wege einer Vormontage eingeführt werden, bevor diese im nachfolgenden Spritzgussprozess in den das Formteil umgebenden Kunststoff eingebettet und so am Aussteller 12 fixiert wird.

An ihrem dem Basisteil 14 zugewandten Endabschnitt weist die Feder 36 eine abstützende Lasche 38 auf, mittels derer die Feder 36 entweder fest am Basisteil 14 angeordnet sein kann oder sich hieran abstützt. Die Hilfsfeder 36 ist insbesondere zur Initiierung einer den Aussteller 12 hochklappenden Ausstellbewegung vorgesehen. Mit Hilfe der Hilfsfeder 36 kann die Öffnungsbewegung des Ausstellers 12 gegenüber dem Basisteil 14 unterstützt werden. So ermöglicht die Hilfsfeder 36, die zwischen Aussteller 12 und Basisteil 14 angeordnete Schenkelfeder 18 hinsichtlich ihrer Federkraft etwas geringer zu dimensionieren, was sich vorteilhaft auf die mechanische Belastung von Aussteller 12 und Basisteil 14 auswirken kann.

Das Vorsehen einer Befestigungsöffnung 60 im als Einleger fungierenden strukturverstärkenden Formteil 34 erfolgt nahezu kostenneutral, da der zur Schaffung der Befestigungsöffnung 60 vorgesehene Stanzprozess ohnehin im Zuge des das Formteil richtenden Prägeprozesses erfolgt. Auch ist für die endgültige Befestigung der Hilfsfeder 36 kein separates Befestigungselement erforderlich. Durch Um- oder Einspritzen der Feder 36 in einem Ein- oder Mehrkomponenten-Spritzgussprozess zur Bildung von Aussteller 12 und/oder Basisteil 14 erfolgt die Montage der Feder 36 am Aussteller 12 ohne weitere Montageschritte.

Neben der Montage der Hilfsfeder 36 am Aussteller 12 erweist es sich ferner als vorteilhaft, dass auch der Schenkel 30, der als Gelenk zwischen Aussteller 12 und Basisteil 14 fungierenden Schenkelfeder 18 im Zuge des richtenden Prägeprozesses unmittelbar mit den jeweiligen Seitenschenkeln 54, 58 des als Einleger fungierenden Formteils 34 verbunden werden kann.

Der entsprechende Schenkel 30 der Schenkelfeder 18 kann vor dem richtenden Prägeprozess des Formteils 34 in die offenen Enden der seitlichen Schenkel 54, 58 des Formteils 34 eingeführt werden und im Zuge des das Formteil richtenden Prägeprozesses durch entsprechende Verformung der freien Enden der Seitenschenkel 54, 58 klemmend mit diesen verbunden werden. Durch den nachfolgenden Spritzgussprozess kann eine ergänzende Befestigung von Schenkelfeder 18 und Aussteller 12 bzw. Basisteil 14 erfolgen.

### Bezugszeichenliste

- 10: Windabweiser
- 12: Aussteller
- 14: Basisteil
- 16: Flächenstück
- 17: Befestigungselement
- 18: Gelenk/Schenkelfeder
- 20: Mittelabschnitt
- 22: Krümmungsabschnitt
- 24: Seitenschenkel
- 26: Krümmungsabschnitt
- 28: Seitenschenkel
- 30: Federschenkel
- 31: Federschenkel
- 32: Kunststoffummantelung
- 34: Formteil
- 36: Hilfsfeder
- 38: Lasche
- 40: Befestigungsabschnitt
- 42: Sicke
- 44: Sicke
- 46: Sicke
- 48: Sicke
- 50: Mittelabschnitt
- 52: Krümmungsabschnitt
- 54: Seitenschenkel
- 56: Krümmungsabschnitt
- 58: Seitenschenkel
- 60: Aufnahmeöffnung

## Patentansprüche

1. Strukturverstärkendes Formteil für eine Luftleiteinrichtung (10) eines Kraftfahrzeugs, welches einen bereichsweise gekrümmten Verlauf aufweist und **dadurch gekennzeichnet ist, dass** es zur Einhaltung vorgegebener geometrischer Außenkonturen und geometrischer Toleranzen eine Vielzahl voneinander beabstandeter plastisch deformierter Deformationsabschnitte (42, 44; 46, 48) aufweist.

2. Formteil nach Anspruch 1, wobei die Deformationsabschnitte (42, 44, 46, 48) zur Reduzierung von durch bereichsweises Biegen oder Krümmen des Formteils bedingten Rückstellkräften mittels Prägen in das Formteil einbringbar sind.

3. Formteil nach einem der vorhergehenden Ansprüche, mit einem zumindest bereichsweise im Wesentlichen geradlinig verlaufenden Mittelabschnitt (50), welcher senkrecht oder schräg zu seiner Längserstreckung verlaufende, als Sicken (42, 44, 46, 48) ausgebildete Deformationsabschnitte aufweist.

4. Formteil nach Anspruch 3, wobei der Mittelabschnitt (50) über jeweils einen Krümmungsabschnitt (52, 56) in zwei Seitenschenkel (54, 58) übergeht, welche sich schräg oder senkrecht zur Längsrichtung des Mittelabschnitts (50) erstrecken.

5. Formteil nach einem der vorhergehenden Ansprüche, welches zumindest bereichsweise als geschlossenes Hohlprofil oder als Rohr ausgebildet ist.

6. Formteil nach einem der Ansprüche 4 oder 5, welches zumindest bereichsweise ein von einem Rundprofil abweichendes Querschnittsprofil aufweist.

7. Formteil nach einem der vorhergehenden Ansprüche, welches zur geometrischen Anpassung an ein vorgegebenes Querschnittsprofil zumindest bereichsweise und/oder abschnittsweise plastisch deformiert ist.

8. Formteil nach einem der vorhergehenden Ansprüche 4 bis 7, wobei die freien Enden der Seitenschenkel (54, 58), welche dem Mittelabschnitt (50) abgewandt zu liegen kommen, jeweils zur kraftschlüssigen und/oder einklemmenden Aufnahme eines Schenkels (30, 31) einer Schenkelfeder (18) ausgebildet sind.

9. Formteil nach einem der vorhergehenden Ansprüche 4 bis 8, wobei die Seitenschenkel (54, 58) dem angrenzenden Krümmungsabschnitt (56, 52) zugewandt, jeweils eine seitliche Einführöffnung (60) zur Aufnahme einer eine Verstellbewegung der Luftleiteinrichtung (10) unterstützenden Hilfsfeder (36) aufweist.

10. Formteil nach einem der vorhergehenden Ansprüche 3 bis 9, wobei in Längsrichtung des Mittelabschnitts (50) benachbart zu liegen kommende Deformationsabschnitte (42, 44, 46, 48) über den Umfang des Mittelabschnitts (50) verteilt angeordnet sind.

11. Luftleiteinrichtung für ein Kraftfahrzeug mit einem Basisteil (14) und einem Aussteller (12), welche schwenkbar miteinander verbunden sind und ein flexibles Flächenstück (16) zwischen sich aufspannen, wobei zumindest das Basisteil (14) und/oder der Aussteller ein zumindest bereichsweise mit Kunststoff umspritztes Formteil (34) nach einem der vorhergehenden Ansprüche aufweist.

12. Verfahren zur Herstellung eines Formteils nach einem der Ansprüche 1 bis 10, wobei ein rohrartiger Zuschnitt aus plastisch deformierbarem Material in eine vorgegebene Form gebogen und anschließend zur Einhaltung vorgegebener geometrischer Außenkonturen und geometrischer Toleranzen mittels eines Prägeprozess zum Einbringen einer Vielzahl von zueinander beabstandeten Deformationsabschnitten (42, 44, 46, 48) plastisch deformiert wird.

13. Verfahren nach Anspruch 12, wobei die Deformationsabschnitte (42, 44, 46, 48) mittels einzelner sowohl über den Umfang als auch entlang des Zuschnitts verteilt angeordneter Prägestifte in den Zuschnitt eingebracht werden.

14. Verfahren nach einem der vorhergehenden Ansprüche 12 oder 13 wobei im Zuge des Prägeprozesses an den Seitenschenkeln (54, 58) des Formteils nach Anspruch 4, dem angrenzenden Krümmungsabschnitt (56, 52) zugewandt, jeweils eine Einführöffnung (60) eingebracht wird, in welche vor einem Umspritzen des Formteils (34) mit einem Kunststoff, eine die Verstellbewegung der Luftleiteinrichtung (10) unterstützende Hilfsfeder (36) eingesetzt wird.

## Claims

1. Structure-reinforcing shaped part for an air guiding device (10) of a motor vehicle, which shaped part has a profile which is curved in regions, and which shaped part is **characterized in that**, in order to comply with predefined geometric outer contours and geometric tolerances, it has a multiplicity of plastically deformed deformation sections (42, 44; 46, 48) which are spaced apart from one another.

2. Shaped part according to Claim 1, it being possible for the deformation sections (42, 44, 46, 48) to be introduced into the shaped part by means of stamping, in order to reduce restoring forces which are induced by bending or arching of the shaped part in regions.

3. Shaped part according to one of the preceding claims, having a centre section (50) which extends substantially rectilinearly at least in regions and has deformation sections which are configured as beads (42, 44, 46, 48) and extend perpendicularly or obliquely with respect to the longitudinal extent of the said centre section (50).

4. Shaped part according to Claim 3, the centre section (50) merging via in each case one curvature section (52, 56) into two side limbs (54, 58) which extend obliquely or perpendicularly with respect to the longitudinal direction of the centre section (50).

5. Shaped part according to one of the preceding claims, which shaped part is configured at least in regions as a closed hollow profile or as a tube.

6. Shaped part according to either of Claims 4 and 5, which shaped part has, at least in regions, a cross-sectional profile which differs from a round profile.

7. Shaped part according to one of the preceding claims, which shaped part is deformed plastically at least in regions and/or in sections, in order to adapt it geometrically to a predefined cross-sectional profile.

8. Shaped part according to one of the preceding Claims 4 to 7, the free ends of the side limbs (54, 58) which come to lie facing away from the centre section (50) being configured in each case to receive a leg (30, 31) of a leg spring (18) in a non-positive and/or clamping manner.

9. Shaped part according to one of the preceding Claims 4 to 8, the side limbs (54, 58) having, facing the adjacent curvature section (56, 52), in each case one lateral introduction opening (60) for receiving an auxiliary spring (36) which assists an adjusting movement of the air guiding device (10).

10. Shaped part according to one of the preceding Claims 3 to 9, deformation sections (42, 44, 46, 48) which come to lie in an adjacent manner in the longitudinal direction of the centre section (50) being arranged distributed over the circumference of the centre section (50).

11. Air guiding device for a motor vehicle having a base part (14) and a deployment element (12), which are connected to one another pivotably and clamp a flexible plane element (16) between them, at least the base part (14) and/or the deployment element having a shaped part (34) according to one of the preceding claims which is encapsulated at least in regions by plastic using injection moulding.

12. Method for producing a shaped part according to one of Claims 1 to 10, a tubular blank of plastically deformable material being bent into a predefined shape and subsequently, in order to comply with predefined geometric outer contours and geometric tolerances, being deformed plastically by means of a stamping process in order to introduce a multiplicity of deformation sections (42, 44, 46, 48) which are spaced apart from one another.

13. Method according to Claim 12, the deformation sections (42, 44, 46, 48) being made in the blank by means of individual stamping pins which are arranged distributed both over the circumference and along the blank.

14. Method according to either of the preceding Claims 12 and 13, in each case one introduction opening (60) being made, during the stamping process, in the side limbs (54, 58) of the shaped part according to Claim 4, facing the adjacent curvature section (56, 52), into which introduction opening (60) an auxiliary spring (36) which assists the adjusting movement of the air guiding device (10) is inserted before the shaped part (34) is encapsulated by a plastic using injection moulding.

## Revendications

1. Pièce moulée pour renforcer la structure pour un dispositif de guidage d'air (10) d'un véhicule automobile, qui présente une allure courbée dans certaines parties, et qui est **caractérisée en ce qu'**elle présente, pour conserver des contours extérieurs géométriques et des tolérances géométriques prédéfinis, une pluralité de sections de déformation (42, 44 ; 46, 48) déformées plastiquement espacées les unes des autres.

2. Pièce moulée selon la revendication 1, dans laquelle les sections de déformation (42, 44, 46, 48) peuvent être réalisées dans la pièce moulée par matriçage pour réduire les forces de rappel causées par le cintrage ou la courbure de la pièce moulée dans certaines parties.

3. Pièce moulée selon l'une quelconque des revendications précédentes, comprenant une portion centrale (50) s'étendant essentiellement en ligne droite au moins dans certaines parties, qui présente des portions de déformation s'étendant perpendiculairement ou obliquement par rapport à son étendue longitudinale et réalisées sous forme de moulures (42, 44, 46, 48).

4. Pièce moulée selon la revendication 3, dans laquelle la portion centrale (50) se prolonge par le biais d'une portion courbe respective (52, 56) en deux branches latérales (54, 58), qui s'étendent obliquement ou perpendiculairement par rapport à la direction longitudinale de la portion centrale (50).

5. Pièce moulée selon l'une quelconque des revendications précédentes, qui est réalisée au moins dans certaines parties sous forme de profilé creux fermé ou sous forme de tube.

6. Pièce moulée selon l'une quelconque des revendications 4 ou 5, qui présente au moins dans certaines parties un profilé en section transversale s'écartant d'un profilé rond.

7. Pièce moulée selon l'une quelconque des revendications précédentes, qui est déformée plastiquement au moins dans certaines parties et/ou portions, en vue de l'adaptation géométrique à un profilé en section transversale prédéfini.

8. Pièce moulée selon l'une quelconque des revendications 4 à 7, dans laquelle les extrémités libres des branches latérales (54, 58) qui viennent en appui à l'opposé de la portion centrale (50), sont réalisées à chaque fois de manière à recevoir, par engagement par force et/ou par serrage, une branche (30, 31) d'un ressort à branches (18).

9. Pièce moulée selon l'une quelconque des revendications précédentes 4 à 8, dans laquelle les branches latérales (54, 58) tournées vers la portion courbe adjacente (56, 52), présentent chacune une ouverture d'insertion latérale (60) pour recevoir un ressort auxiliaire (36) facilitant un mouvement de réglage du dispositif de guidage d'air (10).

10. Pièce moulée selon l'une quelconque des revendications précédentes 3 à 9, dans laquelle, des portions de déformation (42, 44, 46, 48) venant s'appliquer de manière adjacente dans la direction longitudinale de la portion centrale (50) sont réparties sur la périphérie de la portion centrale (50).

11. Dispositif de guidage d'air pour un véhicule automobile comprenant une partie de base (14) et un dispositif d'orientation (12), qui sont connectés l'un à l'autre de manière pivotante et tendent entre eux une pièce flexible en nappe (16), au moins la partie de base (14) et/ou le dispositif d'orientation présentant une pièce moulée (34) surmoulée de plastique au moins dans certaines parties selon l'une quelconque des revendications précédentes.

12. Procédé de fabrication d'une pièce moulée selon l'une quelconque des revendications 1 à 10, dans lequel une pièce découpée de type tubulaire en matériau déformable plastiquement est cintrée dans une forme prédéfinie et est ensuite déformée plastiquement pour conserver des contours extérieurs géométriques et des tolérances géométriques prédéfinis au moyen d'un processus de matriçage pour réaliser une pluralité de portions de déformation (42, 44, 46, 48) espacées les unes des autres.

13. Procédé selon la revendication 12, dans lequel les portions de déformation (42, 44, 46, 48) sont réalisées dans la pièce découpée au moyen de broches de matriçage individuelles et réparties à la fois sur la périphérie et aussi le long de la pièce découpée.

14. Procédé selon l'une quelconque des revendications précédentes 12 ou 13, dans lequel au cours du processus de matriçage au niveau des branches latérales (54, 58) de la pièce moulée selon la revendication 4, en regard de la portion courbe adjacente (56, 52), est réalisée à chaque fois une ouverture d'insertion (60) dans laquelle est inséré un ressort auxiliaire (36) facilitant le mouvement de réglage du dispositif de guidage d'air (10), avant un surmoulage de la pièce moulée (34) avec du plastique.
